(19) Europäisches Patentamt
European Patent Office
Office européen des brevets

(11) **EP 4 040 421 B1**

(12) **EUROPEAN PATENT SPECIFICATION**

(45) Date of publication and mention
of the grant of the patent:
**14.02.2024  Bulletin 2024/07**

(21) Application number: **22179168.4**

(22) Date of filing: **15.06.2022**

(51) International Patent Classification (IPC):
*G08G 1/01* $^{(2006.01)}$   *G06Q 50/30* $^{(2012.01)}$
*G06Q 30/02* $^{(2023.01)}$   *G06Q 10/04* $^{(2023.01)}$
*G08G 1/04* $^{(2006.01)}$   *G06N 20/00* $^{(2019.01)}$
*G06Q 30/0201* $^{(2023.01)}$   *G06N 5/04* $^{(2023.01)}$

(52) Cooperative Patent Classification (CPC):
**G08G 1/0116; G06Q 10/04; G06Q 30/0201;
G06Q 50/40; G08G 1/0129; G08G 1/0141;
G08G 1/0145; G08G 1/04;** G06N 5/04

(54) **METHOD AND APPARATUS FOR PREDICTING TRAFFIC DATA AND ELECTRONIC DEVICE**

VERFAHREN UND VORRICHTUNG ZUR VORHERSAGE VON VERKEHRSDATEN UND
ELEKTRONISCHES GERÄT

PROCÉDÉ ET DISPOSITIF DE PRÉDICTION DE DONNÉES DE TRAFIC ET DISPOSITIF
ELECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.06.2021  CN 202110677845**

(43) Date of publication of application:
**10.08.2022  Bulletin 2022/32**

(73) Proprietor: **Apollo Intelligent Connectivity
(Beijing)
Technology Co., Ltd.
Beijing 100176 (CN)**

(72) Inventor: **XU, Qiqi
Beijing, 100176 (CN)**

(74) Representative: **Studio Torta S.p.A.
Via Viotti, 9
10121 Torino (IT)**

(56) References cited:
DE-A1-102011 083 677    US-A1- 2011 106 416
US-A1- 2015 228 188    US-A1- 2018 304 899
US-A1- 2019 139 402

**Description**

## TECHNICAL FIELD

The disclosure relates to the field of computer technology, specially the field of intelligent transportation technology, and in particular to a method for predicting traffic data, an apparatus for predicting traffic data and an electronic device.

## BACKGROUND

Traffic data prediction is an important part of intelligent transportation technology. Accurate traffic data prediction helps to take appropriate traffic control measures in time to make traffic more orderly.

However, the road traffic system is a time-varying and complex nonlinear system, not only including natural factors, such as seasons and climate, but also including various human factors, such as traffic accidents, emergencies and psychological states of drivers, which affects real-time and accurate prediction of road traffic data.

Document US 2019/139402 A1 discloses a speed prediction method and apparatus. The method includes: obtaining traffic-effecting parameter information of a first road segment in a current time period; determining a similarity between the traffic-effecting parameter information and historical traffic-effecting parameter information of the first road segment stored in a historical traffic database, and determining target historical traffic-effecting parameter information according to the determined similarity; and predicting a first speed of a vehicle on the first road segment in the next time period, according to a speed of a vehicle in a next time period of a time period corresponding to the target historical traffic-effecting parameter information, stored in the historical traffic database.

## SUMMARY

The disclosure provides a method for predicting traffic data, an apparatus for predicting traffic data and an electronic device.

For this, according to a first aspect, the disclosure provides a method for predicting traffic data. By comparing traffic data in historical periods with data in a target period, the traffic data in the reference period that meets requirements is selected from the historical periods, thereby realizing the prediction of the traffic data in the target period, which not only maintains characteristics of the traffic data in the historical periods, but also ensure easy operation and high prediction accuracy.

According to a second aspect, the disclosure provides an apparatus for predicting traffic data.

According to a third aspect, the disclosure provides a non-transitory computer-readable storage medium stored with computer instructions.

According to a fourth aspect, the disclosure provides a computer program product.

In order to achieve the above objectives, embodiments of the first aspect provide a method for predicting traffic data as defined in claim 1.

In order to achieve the above objectives, embodiments of the second aspect provide an apparatus for predicting traffic data ad defined in claim 5.

In order to achieve the above objectives, embodiments of the third aspect provide a non-transitory computer readable storage medium stored with computer instructions, in which the computer instructions are configured to cause the computer to perform the method according to the embodiments of the first aspect.

In order to achieve the above objectives, embodiments of the fourth aspect provide a computer program product including a computer program, in which when the computer program is executed by a processor, the method according to the embodiments of the first aspect is implemented.

The technical solution of the embodiments of the disclosure can realize the following beneficial effects.

Traffic data in a plurality of periods is obtained. The plurality of periods includes the target period and at least one historical period before the target period. The reference period is determined from the at least one historical period based on the time interval between each of the at least one historical period and the target period. The data similarity between the target period and the reference period is determined based on traffic data at the first time point in the target period and traffic data at the time point corresponding to the first time point in the reference period. Reference traffic data at the time point in the reference period is obtained, the time point in the reference period corresponding to the second time point to be predicted in the target period. Traffic data at the second time point in the target period is predicted based on the data similarity between the target period and the reference period, and the reference traffic data in the reference period. According to the traffic data collected in the target period, the traffic data in the reference period that can be used for reference to the target period is selected from the historical period, so as to predict the traffic data of the target period according to the traffic data in the reference period. The prediction accuracy is high.

It should be understood that the content described in this section is not intended to identify the key or important features of the embodiments of the disclosure, nor is it intended to limit the scope of the disclosure. Additional features of the disclosure will be easily understood through the following description.

## BRIEF DESCRIPTION OF THE DRAWINGS

The drawings are used to better understand the solution and do not constitute a limitation of the disclosure, in which:

FIG. 1 is a flowchart of a method for predicting traffic data according to an embodiment of the disclosure.
FIG. 2 is a flowchart of another method for predicting traffic data according to an embodiment of the disclosure.
FIG. 3 is a schematic diagram of an apparatus for predicting traffic data according to an embodiment of the disclosure.
FIG. 4 is a schematic diagram of an electronic device 400 according to an embodiment of the disclosure.

## DETAILED DESCRIPTION

The exemplary embodiments of the disclosure are described below in combination with the accompanying drawings, which include various details of the embodiments of the disclosure to aid in understanding, and should be considered merely exemplary. Therefore, those skilled in the art should know that various changes and modifications can be made to the embodiments described herein.

For the sake of clarity and brevity, descriptions of well-known features and structures have been omitted from the following description.

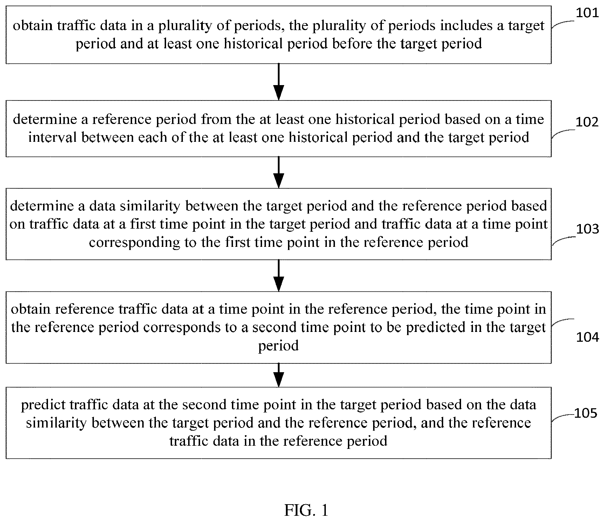

FIG. 1 is a flowchart of a method for predicting traffic data according to an embodiment of the disclosure.

As shown in FIG. 1, the method includes the following steps.

In step 101, traffic data in a plurality of periods is obtained, the plurality of periods including a target period and at least one historical period before the target period.

The traffic data monitored in the plurality of periods is obtained through a video sensing device. By connecting the video sensing device and a traffic signal light device, road traffic flow and light state information of the traffic signal are strongly bound, without aligning a control clock of the signal light with the video sensing device. The traffic data acquired by the video sensing device will be stored in a preset database. When the outside world needs to extract the traffic information of a target road, the required traffic data can be directly extracted from the database. The traffic data includes current real-time traffic data and historical real-time traffic data within various time periods. In a possible implementation, the traffic data includes values of multiple indicators, such as flow, saturation and crossing time.

The period is relative to the sampling point, and according to historical experience, it is only necessary to collect traffic data at 4 sampling points in respective periods before the current time point, and then the traffic data at the next time point can be predicted. For example, the traffic flow at the current time point t is $v(t)$, then the traffic data of the previous sampling points are $v(t-1)$, $v(t-2)$, and $v(t-3)$ respectively. Similarly, the traffic flow at the sampling points of the historical periods can be expressed as: $v_h(t)$, $v_h(t-1)$, $v_h(t-2)$ and $v_h(t-3)$. Correspondingly, the traffic flow at the next time point of the current period and at the next time point of the historical period are: $v(t+1)$, $v_h(t+1)$ respectively.

It should be noted that 4 sampling points are only used for exemplary description, and do not constitute a limitation to this embodiment. Those skilled in the art may know that other period numbers or sampling point numbers do not affect the implementation of this embodiment.

In step 102, a reference period is determined from the at least one historical period based on a time interval between each of the at least one historical period and the target period.

Optionally, starting from the historical period closest to the target period, a target number of historical periods are selected as the reference period. In the embodiment, the data prediction error of each historical period may be obtained at first, and the target number is determined according to the number of historical periods having data prediction error within a preset error range in the at least one historical period, and further, the target number of historical periods closest to the target period are selected as the reference periods.

The time interval between the historical period and the target period is different from the time interval between any two sampling points in step 101. The time interval mentioned in this step may be the time interval between the current period, that is, the target period, and the historical period, such as today and the day before yesterday.

In this embodiment, the determination of the reference period may include two implementation schemes.

In the first possible implementation scheme, starting from the target period, the target number of historical periods are selected as the reference period in turn, namely the target number is determined at first, and then the target number of historical periods closest to the target period are searched from a database. The determination of the target number here is determined according to the data prediction error of each historical period and the preset error range.

In the second possible implementation scheme, the target number is determined first according to the data prediction error of each historical period and the preset error range, and then the historical period corresponding to the data prediction error within the preset error range is determined as the reference period.

In step 103, a data similarity between the target period and the reference period is determined based on traffic data at a first time point in the target period and traffic data at a time point corresponding to the first time point in the reference period.

According to the invention, a first state vector of the target period is determined based on traffic data at a plurality of first time points in the target period. A second state vector of the reference period is determined based on traffic data at time points corresponding to the plurality of first time points in the reference period. A first correlation coefficient of the flow between two historical periods is determined based on the flow of each of the at least one historical period. A second correlation coefficient of the saturation between two historical periods is determined based on the saturation of each of the at least one historical period. A vector distance between the first state vector and the second state vector is determined based on a difference corresponding to the flow between the first state vector and the second state vector, a difference corresponding to the saturation between the first state vector and the second state vector, the first correlation coefficient and the second correlation coefficient. The data similarity between the target period and the reference period is determined based on the vector distance between the first state vector and the second state vector.

The plurality of first time points may be 4 sampling time points set according to experience, which includes the current time point t, the previous time points t-1, t-2, and t-3.

The state vector is composed of the flow and saturation in the traffic data at the sampling time points of the period. For example, the state vector of the target period is

$X=[v(t)...v(t-3), o(t)...o(t-3)]$, in which $o(t)$ represents the saturation. Similarly, $oh(t)$ represents the saturation of the historical period.

The first correlation coefficient r1 and the second correlation coefficient r2 are Pearson correlation coefficients, and the calculation formula is:

$$r = \frac{\sum (x-\overline{x}) \bullet (y-\overline{y})}{\sqrt{\sum (x-\overline{x})^2} \bullet \sqrt{\sum (y-\overline{y})^2}}$$

In the above calculation formula of the correlation coefficient r, x may be expressed as the traffic flow v(t) at the current time point, and y may be expressed as the traffic flow v(t+1) at the next time point; or, x may be expressed as the saturation o(t) at the current time point, y may be expressed as the saturation o(t+1) at the next time point.

It is worth noting that the first correlation coefficient r1 and the second correlation coefficient r2 obtained from the traffic data in each historical period are applicable to all periods including the current period and respective historical periods.

The vector distance adopts the Euclidean distance, and its calculation formula is:

$$D = \frac{\sqrt{\left\{ r1\left[ (v(t)-v_h(t))^2 + ... + (v(t-3)-v_h(t-3))^2 \right] + r2\left[ (o(t)-o_h(t))^2 + ... + (o(t-3)-o_h(t-3))^2 \right] \right\}}}{r1+r2}$$

In the embodiment, the traffic data sampled at the 4 sampling points (first time points) in the target period and the traffic data of the corresponding time points in the reference period obtained in step 102 are brought into the calculation formula of the vector distance. Thus, the data similarity between the target period and the reference period is obtained. Generally, the smaller the value of the vector distance is, the higher the data similarity is, and the more meaningful it is for the traffic data prediction of the target period.

In step 104, reference traffic data at a time point in the reference period is obtained, the time point in the reference period being corresponding to a second time point to be predicted in the target period.

The second time point to be predicted in the target period is relative to the first time point, and the time interval between the first time point and the second time point is one cycle. For example, the first time point includes: t-3, t-2, t-1 and t, then the second time point is t+1. In addition, the reference traffic data corresponding to the second time point obtained from the reference period only includes the data of traffic flow.

In step 105, traffic data at the second time point in the target period is predicted based on the data similarity between the target period and the reference period, and the reference traffic data in the reference period.

Optionally, in a possible implementation, a weight of the reference period is determined based on the data similarity between the target period and the reference period, in which the weight has a negative correlation with the data similarity. The traffic data at the second time point in the target period is predicted by weighting the reference traffic data in the reference period based on the weight of the reference period.

It should be noted that the negative correlation refers to a correlation in which the weight decreases as the similarity increases, and increases as the similarity decreases, for example, an inverse relationship.

The main function of the weight of the reference period is to measure a contribution of the data used in the reference period, that is, the traffic flow at the second time point, to the traffic flow to be predicted at the second time point in the target period, the calculation formula is:

$$\beta_i = \frac{D_i^{-1}}{\sum_{i=1}^{k} D_i^{-1}} \quad (i=1,2,\cdots\cdots, k)$$

In the above formula, $\beta$ is the weight of the reference period, and $D_i$ is the vector distance between the target period and the reference period. It can be seen from the formula that the larger the vector distance, the smaller the weight.

According to the weight of the reference period and the reference traffic data at the second time point in the reference period, that is, the traffic flow data at the second time point, the traffic data at the second time point in the target period, that is, the traffic flow at the second time point in the target period, can be predicted, and its prediction formula is:

$$v(t+1) = \sum_{i=1}^{k} \beta_i \bullet v_{hi}(t+1) \quad (i=1,2,\cdots\cdots, k)$$

It can be seen from the above formula that if the weight of the reference period is large, the reference traffic flow data at the corresponding time point in the reference period can be used more as the traffic flow at the second time point in the target period. On the contrary, if the weight of the reference period is small, the amount of data in the reference period used is also small, so that the reference traffic data at the second time point of the reference period is effectively used, to further improve the prediction accuracy.

According to the method for predicting traffic data according to the embodiments of the disclosure, traffic data in a plurality of periods is obtained. The plurality of periods includes the target period and at least one historical period before the target period. The reference period is determined from the at least one historical period based on the time interval between each of the at least one historical period and the target period. The data similarity between the target period and the reference period is determined based on traffic data at the first time point in the target period and traffic data at a time point corresponding to the first time point in the reference period. Reference traffic data at the time point in the reference period is obtained, the time point in the reference period being corresponding to the second time point to be predicted in the target period. Traffic data at the second time point in the target period is predicted based on the data similarity between the target period and the reference period, and the reference traffic data in the reference period. The traffic data in the reference period that meets the requirements is selected from the historical periods by comparing the traffic data in the historical period with the target period data. Therefore, the prediction of the traffic data in the target period is realized, which not only maintains the characteristics of the traffic data in the historical period, but also ensure easy operation and high prediction accuracy.

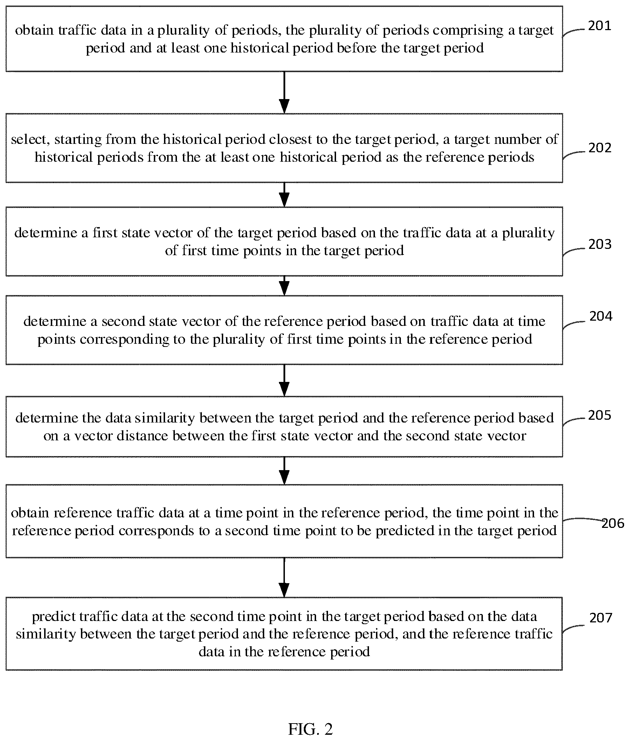

On the basis of the above embodiment, this embodiment provides another possible implementation of the method for predicting traffic data. FIG. 2 is a flowchart of another method for predicting traffic data according to an embodiment of the disclosure.

As shown in FIG. 2, the method includes the following steps.

In step 201, traffic data in a plurality of periods is obtained, the plurality of periods including a target period and at least one historical period before the target period.

In this embodiment, specific reference may be made to step 101 in the above embodiment, the principle is the same, and details are not repeated here.

In step 202, starting from the historical period closest to the target period, a target number of historical periods are selected from the at least one historical period as the reference period.

Optionally, in a possible implementation, a data prediction error of each of the at least one historical period is obtained, and the target number is determined based on a number of historical periods having data prediction error within a preset error range in the at least one historical period.

In this embodiment, the data prediction error of each of the at least one historical period is actually a difference between the predicted traffic flow and the actual traffic flow at the time point in each of the historical periods corresponding to the next time point in step 101 in the above embodiment. The preset error range is an error value distribution interval obtained according to the data prediction error of each historical period, and this distribution interval can be selected based on error ratios of less than 20% according to experience. For example, in each of the historical periods, the predicted traffic flow value at the next time point is A, and the actual traffic flow value is B, then the data prediction error ratio is (A-B)/A. Then, the data prediction error ratios whose values is less than 20% are counted, and the preset error range is determined according to upper and lower limits of these data error values.

Before determining the target number, since there may be a large amount of historical data before the target period, in order to achieve a better matching degree between the traffic data of each historical period and the traffic data of the target period, according to experience, the time interval between each historical period and the target period is selected to be no more than 20 days at most. Then, starting from the target period, traffic data of 20 periods are sequentially acquired, and the data prediction error of these traffic data is compared with the preset error range, and the historical periods having the data prediction error within the preset error range are selected. The number of these historical periods that meet the requirements is counted to obtain the target number.

According to the target number, starting from the historical period closest to the target period, the target number of historical periods are selected as the reference periods. The selection of the reference period may include two schemes.

In the first scheme, the historical period that meets the requirement is determined as the reference period. For example, the requirement may be: the similarity between the historical period and the target period being greater than or equal to a certain threshold, or the prediction error being less than or equal to a certain error limit.

In the second scheme, starting from the historical period closest to the target period, a target number of historical periods are successively selected as the reference periods.

In the first scheme, the data prediction errors of the reference periods are all within the preset error range, and the reference periods may be discretely or adjacently arranged in the historical time (e.g., the number of days). In the second scheme, the reference periods are only adjacent to each other, and are the target number of historical periods adjacent to the target period.

In step 203, a first state vector of the target period is determined based on the traffic data at a plurality of first time points in the target period.

In the state vector $X=[v(t)...v(t-3), o(t)...o(t-3)]$ of the target period, for flow $v(t)$, and saturation $o(t)$, when calculating the similarity between the current period data and the historical period data, after weighing various influence factors, the influence factor with the highest correlation coefficient between periods is determined as the indicator of the state vector, that is, flow and saturation. Therefore, the traffic data of the subsequent target period predicted according to the flow and saturation in the historical period is more accurate.

In step 204, a second state vector of the reference period is determined based on traffic data at time points corresponding to the plurality of first time points in the reference period.

The state vector of the reference period is $X_h=[v_h(t)...v_h(t-3), o_h(t)...o_h(t-3)]$.

In step 205, the data similarity between the target period and the reference period is determined based on a vector distance between the first state vector and the second state vector.

In this embodiment, the calculation method of the vector distance is shown in step 103 of the above embodiment, and the principle is the same, which will not be repeated here. Since the target number of reference periods need to be selected, the target number of vector distances need to be calculated.

In step 206, reference traffic data at a time point in the reference period is obtained, the time point in the reference period being corresponding to a second time point to be predicted in the target period.

In this embodiment, specific reference may be made to step 104 in the above embodiment, and the principle is the same, which will not be repeated here.

In step 207, traffic data at the second time point in the target period is predicted based on the data similarity between the target period and the reference period, and the reference traffic data in the reference period.

Optionally, in a possible implementation, the weight of the reference period is determined according to the data similarity between the target period and the reference period. The weight has a negative correlation with the data similarity. According to the weight of the reference period, the reference traffic data in the reference period is weighted to predict the traffic data of the second time point in the target period.

In this embodiment, for the weight of the reference period and the prediction formula and principle of the traffic data at the second time point in the target period, reference may be made to the relevant statement in step 105 in the above embodiment, which will not be repeated here. It is worth noting that, the reference traffic data in the reference period used in this embodiment is real-time traffic flow data at a time point corresponding to the second time point in the target period.

In addition, since this embodiment does not perform any processing on the original data in the reference period, the characteristics of the original data are maintained, which is not only beneficial to the authenticity of the predicted data, but also easy to operate. Since the traffic data may contain other influence factors, other influence factors can also be predicted by using the method for predicting traffic data described in the disclosure, which is not limited herein.

With the method for predicting traffic data according to embodiments of the disclosure, traffic data in a plurality of periods is obtained. The plurality of periods includes the target period and at least one historical period before the target period. The reference periods are determined from the at least one historical period based on a time interval between each of the at least one historical period and the target period. The data similarity between the target period and the reference period is determined based on traffic data at the first time point in the target period and traffic data at the time point corresponding to the first time point in the reference period. Reference traffic data at the time point in the reference period is obtained, the time point in the reference period being corresponding to the second time point to be predicted in the target period. Traffic data at the second time point in the target period is predicted based on the data similarity between the target period and the reference period, and the reference traffic data in the reference period. The traffic data in the reference period that meets the requirements is selected from the historical period by comparing the traffic data in the historical period with the target period data. Therefore, the prediction of the traffic data in the target period is realized, which not only maintains the characteristics of the traffic data in the historical period, but also ensure easy operation and high prediction accuracy.

In order to realize the above embodiments, the disclosure also provides an apparatus for predicting traffic data.

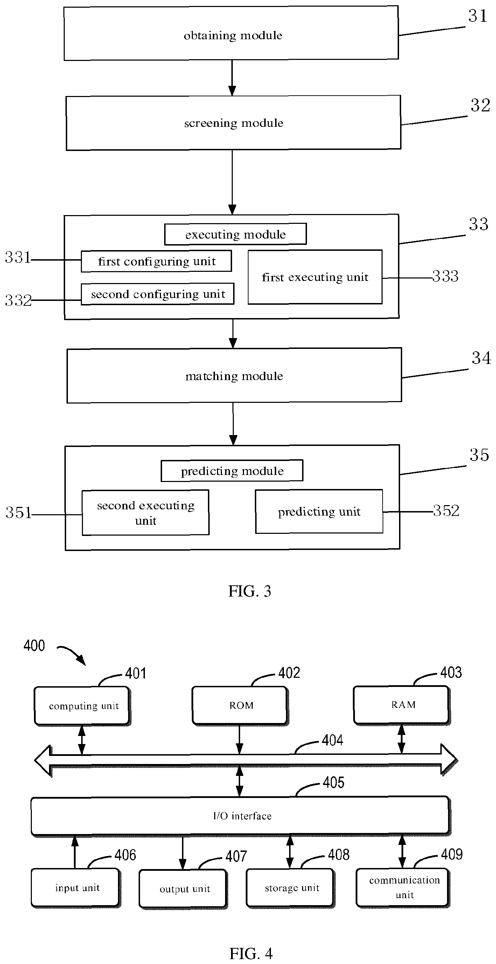

FIG. 3 is a schematic diagram of an apparatus for predicting traffic data according to an embodiment of the disclosure.

As shown in FIG. 3, the apparatus includes: an obtaining module 31, a screening module 32, an executing module 33, a matching module 34 and a predicting module 35.

The obtaining module 31 is configured to obtain traffic data in a plurality of periods, the plurality of periods includes a target period and at least one historical period before the target period.

The screening module 32 is configured to determine a reference period from the at least one historical period based on a time interval between each of the at least one historical period and the target period.

The executing module 33 is configured to determine a data similarity between the target period and the reference period based on traffic data at a first time point in the target period and traffic data at a time point corresponding to the first time point in the reference period.

The matching module 34 is configured to obtain reference traffic data at a time point in the reference period, the time point in the reference period corresponds to a second time point to be predicted in the target period.

The predicting module 35 is configured to predict traffic data at the second time point in the target period based on the data similarity between the target period and the reference period, and the reference traffic data in the reference period.

Further, in a possible implementation, the executing module 33 also includes: a first configuring unit 331, a second configuring unit 332 and a first executing unit 333.

The first configuring unit 331 is configured to determine a first state vector of the target period based on the traffic data at a plurality of first time points in the target period.

The second configuring unit 332 is configured to determine a second state vector of the reference period based on traffic data at time points corresponding to the plurality of first time points in the reference period.

The first executing unit 333 is configured to determine the data similarity between the target period and the reference period based on a vector distance between the first state vector and the second state vector.

Further, in a possible implementation, the predicting module 35 also includes: a second executing unit 351 and a predicting unit 352.

The second executing unit 351 is configured to determine a weight of the reference period based on the data similarity between the target period and the reference period, in which the weight has a negative correlation with the data similarity.

The predicting unit 352 is configured to predict the traffic data at the second time point in the target period by weighting the reference traffic data in the reference period based on the weight of the reference period.

In a possible implementation, the screening module 32 is further configured to:

obtain a data prediction error of each of the at least one historical period; and
determine the target number based on a number of historical periods having data prediction error within a preset error range in the at least one historical period.

According to the invention, the first executing unit 333 is further configured to:

determine a first correlation coefficient of the flow between historical periods based on the flow of each of the at least one historical period;
determine a second correlation coefficient of the saturation between historical periods based on the saturation of each of the at least one historical period; and
determine the vector distance based on a difference corresponding to the flow between the first state vector and the second state vector, a difference corresponding to the saturation between the first state vector and the second state vector, the first correlation coefficient and the second correlation coefficient.

With the apparatus for predicting traffic data according to the embodiments of the disclosure, traffic data in a plurality of periods is obtained. The plurality of periods includes a target period and at least one historical period before the target period. A reference period is determined from the at least one historical period based on a time interval between each of the at least one historical period and the target period. A data similarity between the target period and the reference period is determined based on traffic data at a first time point in the target period and traffic data at a time point corresponding to the first time point in the reference period. Reference traffic data at a time point in the reference period is obtained, the time point in the reference period corresponds to a second time point to be predicted in the target period. Traffic data at the second time point in the target period is predicted based on the data similarity between the target period and the reference period, and the reference traffic data in the reference period. The traffic data in the reference period that meets the requirements is selected from the historical period by comparing the traffic data in the historical period with the target period data. Therefore, the prediction of the traffic data in the target period is realized, which not only maintains the characteristics of the traffic data in the historical period, but also ensure easy operation and high prediction accuracy.

It should be noted that the foregoing explanation on the embodiments of the method for predicting traffic data is applicable to the apparatus for predicting traffic data of this embodiment, which are not repeated here.

According to embodiments of the disclosure, the disclosure also provides an electronic device, a readable storage medium and a computer program product.

FIG. 4 is a block diagram of an electronic device 400 according to embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 4, the device 400 includes a computing unit 401 performing various appropriate actions and processes based on computer programs stored in a read-only memory (ROM) 402 or computer programs loaded from the storage unit 408 to a random access memory (RAM) 403. In the RAM 403, various programs and data required for the operation of the device 400 are stored. The computing unit 401, the ROM 402, and the RAM 403 are connected to each other through a bus 404. An input/output (I/O) interface 405 is also connected to the bus 404.

Components in the device 400 are connected to the I/O interface 405, including: an inputting unit 406, such as a keyboard, a mouse; an outputting unit 407, such as various types of displays, speakers; a storage unit 408, such as a disk, an optical disk; and a communication unit 409, such as network cards, modems, wireless communication transceivers, and the like. The communication unit 409 allows the device 400 to exchange information/data with other devices through a computer network such as the Internet and/or various telecommunication networks.

The computing unit 401 may be various general-purpose and/or dedicated processing components with processing and computing capabilities. Some examples of computing unit 401 include, but are not limited to, a central processing unit (CPU), a graphics processing unit (GPU), various dedicated artificial intelligence (AI) computing chips, various computing units that run machine learning model algorithms, and a digital signal processor (DSP), and any appropriate processor, controller and microcontroller. The computing unit 401 executes the various methods and processes described above, such as the method for predicting traffic data. For example, in some embodiments, the method may be implemented as a computer software program, which is tangibly contained in a machine-readable medium, such as the storage unit 408. In some embodiments, part or all of the computer program may be loaded and/or installed on the device 400 via the ROM 402 and/or the communication unit 409. When the computer program is loaded on the RAM 403 and executed by the computing unit 401, one or more steps of the method described above may be executed. Alternatively, in other embodiments, the computing unit 401 may be configured to perform the method for predicting traffic data in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and Block-chain network.

The computer system may include a client and a server. The client and server are generally remote from each other and interacting through a communication network. The client-server relation is generated by computer programs running on the respective computers and having a client-server relation with each other. The server can be a cloud server, also known as a cloud computing server or a cloud host, which is a host product in the cloud computing service system, to solve the traditional physical host with a Virtual Private Server (VPS) service, which has the defects of difficult management and weak business expansibility. The server can also be a server for a distributed system, or a server that incorporates a block-chain.

It is noted that artificial intelligence is a discipline that studies certain thinking processes and intelligent behaviors (such as learning, reasoning, thinking and planning) that allow computers to simulate life, which has both hardware-level technologies and software-level technologies. Artificial intelligence hardware technology generally includes technologies such as sensors, dedicated artificial intelligence chips, cloud computing, distributed storage, and big data processing. Artificial intelligence software technology generally includes computer vision technology, speech recognition technology, natural language processing technology, and its learning/deep learning, big data processing technology, knowledge map technology and other aspects.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors.

**Claims**

1. A method for predicting traffic data, comprising:

obtaining traffic data in a plurality of periods, the plurality of periods comprising a target period and at least one historical period before the target period (101; 201);

determining a reference period from the at least one historical period based on a time interval between each of the at least one historical period and the target period (102);

determining a data similarity between the target period and the reference period based on traffic data at a first time point in the target period and traffic data at a time point corresponding to the first time point in the reference period (103);

obtaining reference traffic data at a time point in the reference period, the time point in the reference period being corresponding to a second time point to be predicted in the target period (104; 206); and

predicting traffic data at the second time point in the target period based on the data similarity between the target period and the reference period, and the reference traffic data in the reference period (105; 207),

wherein the traffic data comprises flow and saturation, and determining the data similarity between the target period and the reference period based on the traffic data at the first time point in the target period and the traffic data at the time point corresponding to the first time point in the reference period (103), comprises:

determining a first state vector of the target period based on traffic data at a plurality of first time points in the target period (203);

determining a second state vector of the reference period based on traffic data at time points corresponding to the plurality of first time points in the reference period (204);

determining a first correlation coefficient of the flow between historical periods based on the flow of each of the at least one historical period;

determining a second correlation coefficient of the saturation between historical periods based on the saturation of each of the at least one historical period;

determining the vector distance based on a difference corresponding to the flow between the first state vector and the second state vector, a difference corresponding to the saturation between the first state vector and the second state vector, the first correlation coefficient and the second correlation coefficient; and

determining the data similarity between the target period and the reference period based on a vector distance between the first state vector and the second state vector (205).

2. The method according to claim 1, wherein determining the reference period from the at least one historical period based on the time interval between each of the at least one historical period and the target period (102), comprises: selecting, starting from the historical period closest to the target period, a target number of historical periods from the at least one historical period as the reference periods (202).

3. The method according to claim 2, before selecting the target number of historical periods from the at least one historical period starting from the historical period closest to the target period as the reference periods, further comprising:

obtaining a data prediction error of each of the at least one historical period; and

determining the target number based on a number of historical periods having data prediction error within a preset error range in the at least one historical period.

4. The method according to any one of claims 1 to 3, wherein predicting the traffic data at the second time point in the target period based on the data similarity between the target period and the reference period, and the reference traffic data in the reference period (105; 207), comprises:

determining a weight of the reference period based on the data similarity between the target period and the reference period, wherein the weight has a negative correlation with the data similarity; and

predicting the traffic data at the second time point in the target period by weighting the reference traffic data in the reference period based on the weight of the reference period.

5. An apparatus for predicting traffic data, comprising:

an obtaining module (31), configured to obtain traffic data in a plurality of periods, the plurality of periods comprising a target period and at least one historical period before the target period;

a screening module (32), configured to determine a reference period from the at least one historical period based on a time interval between each of the at least one historical period and the target period;

an executing module (33), configured to determine a data similarity between the target period and the reference period based on traffic data at a first time point in the target period and traffic data at a time point corresponding to the first time point in the reference period;

a matching module (34), configured to obtain reference traffic data at a time point in the reference period, the time point in the reference period being corresponding to a second time point to be predicted in the target period; and

a predicting module (35), configured to predict traffic data at the second time point in the target period based on the data similarity between the target period and the reference period, and the reference traffic data in the reference period,

wherein the traffic data comprises flow and saturation, and the executing module (33) comprises:

a first configuring unit (331), configured to determine a first state vector of the target period based on the traffic data at a plurality of first time points in the target period;

a second configuring unit (332), configured to determine a second state vector of the reference period based on traffic data at time points corresponding to the plurality of first time points in the reference period; and

a first executing unit (333), configured to:

determine a first correlation coefficient of the flow between historical periods based on the flow of each of the at least one historical period;

determine a second correlation coefficient of the saturation between historical periods based on the saturation of each of the at least one historical period;

determine the vector distance based on a difference corresponding to the flow between the first state vector and the second state vector, a difference corresponding to the saturation between the first state vector and the second state vector, the first correlation coefficient and the second correlation coefficient; and

determine the data similarity between the target period and the reference period based on a vector distance between the first state vector and the second state vector.

6. The apparatus according to claim 5, wherein the screening module (32) is configured to select, starting from the historical period closest to the target period, a target number of historical periods from the at least one historical period as the reference periods.

7. The apparatus according to claim 6, wherein the screening module (32) is further configured to:

obtain a data prediction error of each of the at least one historical period; and

determine the target number based on a number of historical periods having data prediction error within a preset error range in the at least one historical period.

8. The apparatus according to any one of claims 5 to 7, wherein the predicting module (35) comprises:

a second executing unit (351), configured to determine a weight of the reference period based on the data similarity between the target period and the reference period, wherein the weight has a negative correlation with the data similarity; and

a predicting unit (352), configured to predict the traffic data at the second time point in the target period by weighting the reference traffic data in the reference period based on the weight of the reference period.

9. A non-transitory computer readable storage medium stored with computer instructions, wherein the computer instructions are configured to cause the computer to perform the method according to any of claims 1-4.

10. A computer program product comprising a computer program, wherein when the computer program is executed by a processor, the method according to any of claims 1-4 is implemented.

**Patentansprüche**

1. Verfahren zum Vorhersagen von Verkehrsdaten, umfassend:

Erhalten von Verkehrsdaten in einer Vielzahl von Zeiträumen, wobei die Vielzahl von Zeiträumen einen Zielzeitraum und mindestens einen historischen Zeitraum vor dem Zielzeitraum (101; 201) umfassen;
Bestimmen eines Referenzzeitraums aus dem mindestens einen historischen Zeitraum auf Grundlage eines Zeitintervalls zwischen jedem des mindestens einen historischen Zeitraums und dem Zielzeitraum (102);
Bestimmen einer Datenähnlichkeit zwischen dem Zielzeitraum und dem Referenzzeitraum auf Grundlage von Verkehrsdaten zu einem ersten Zeitpunkt im Zielzeitraum und Verkehrsdaten zu einem Zeitpunkt, der dem ersten Zeitpunkt im Referenzzeitraum (103) entspricht;
Erhalten von Referenzverkehrsdaten zu einem Zeitpunkt im Referenzzeitraum, wobei der Zeitpunkt im Referenzzeitraum einem zweiten Zeitpunkt entspricht, der im Zielzeitraum (104; 206) vorherzusagen ist; und
Vorhersagen von Verkehrsdaten zum zweiten Zeitpunkt im Zielzeitraum auf Grundlage der Datenähnlichkeit zwischen dem Zielzeitraum und dem Referenzzeitraum und den Referenzverkehrsdaten im Referenzzeitraum (105; 207),
wobei die Verkehrsdaten Fluss und Sättigung umfassen, und das Bestimmen der Datenähnlichkeit zwischen dem Zielzeitraum und dem Referenzzeitraum auf Grundlage der Verkehrsdaten zum ersten Zeitpunkt im Zielzeitraum und der Verkehrsdaten zu dem Zeitpunkt, der dem ersten Zeitpunkt im Referenzzeitraum (103) entspricht, umfasst:

> Bestimmen eines ersten Zustandsvektors des Zielzeitraums auf Grundlage von Verkehrsdaten zu einer Vielzahl von ersten Zeitpunkten im Zielzeitraum (203);
> Bestimmen eines zweiten Zustandsvektors des Referenzzeitraums auf Grundlage von Verkehrsdaten zu Zeitpunkten, die der Vielzahl von ersten Zeitpunkten im Referenzzeitraum (204) entsprechen;
> Bestimmen eines ersten Korrelationskoeffizienten des Flusses zwischen historischen Zeiträumen auf Grundlage des Flusses jedes des mindestens einen historischen Zeitraums;
> Bestimmen eines zweiten Korrelationskoeffizienten der Sättigung zwischen historischen Zeiträumen auf Grundlage der Sättigung jedes des mindestens einen historischen Zeitraums;
> Bestimmen des Vektorabstands auf Grundlage einer Differenz, die dem Fluss zwischen dem ersten Zustandsvektor und dem zweiten Zustandsvektor entspricht, einer Differenz, die der Sättigung zwischen dem ersten Zustandsvektor und dem zweiten Zustandsvektor entspricht, des ersten Korrelationskoeffizienten und des zweiten Korrelationskoeffizienten; und
> Bestimmen der Datenähnlichkeit zwischen dem Zielzeitraum und dem Referenzzeitraum auf Grundlage eines Vektorabstands zwischen dem ersten Zustandsvektor und dem zweiten Zustandsvektor (205).

2. Verfahren nach Anspruch 1, wobei das Bestimmen des Referenzzeitraums aus dem mindestens einen historischen Zeitraum auf Grundlage des Zeitintervalls zwischen jedem des mindestens einen historischen Zeitraums und dem Zielzeitraum (102) umfasst:
Auswählen einer Zielanzahl historischer Zeiträume aus dem mindestens einen historischen Zeitraum, beginnend ab dem historischen Zeitraum, der dem Zielzeitraum am nächsten liegt, als die Referenzzeiträume (202).

3. Verfahren nach Anspruch 2, das vor dem Auswählen der Zielanzahl historischer Zeiträume aus dem mindestens einen historischen Zeitraum, beginnend ab dem historischen Zeitraum, der dem Zielzeitraum am nächsten liegt, als die Referenzzeiträume weiter umfasst:

> Erhalten eines Datenvorhersagefehlers jedes des mindestens einen historischen Zeitraums; und
> Bestimmen der Zielanzahl auf Grundlage einer Anzahl historischer Zeiträume, die Datenvorhersagefehler innerhalb eines voreingestellten Fehlerbereichs aufweisen, in dem mindestens einen historischen Zeitraum.

4. Verfahren nach einem der Ansprüche 1 bis 3, wobei das Vorhersagen der Verkehrsdaten zum zweiten Zeitpunkt im Zielzeitraum auf Grundlage der Datenähnlichkeit zwischen dem Zielzeitraum und dem Referenzzeitraum und der Referenzverkehrsdaten im Referenzzeitraum (105; 207) umfasst:

> Bestimmen eines Gewichts des Referenzzeitraums auf Grundlage der Datenähnlichkeit zwischen dem Zielzeitraum und dem Referenzzeitraum, wobei das Gewicht eine negative Korrelation mit der Datenähnlichkeit aufweist; und
> Vorhersagen der Verkehrsdaten zum zweiten Zeitpunkt im Zielzeitraum durch Gewichten der Referenzverkehrsdaten im Referenzzeitraum auf Grundlage des Gewichts des Referenzzeitraums.

5. Einrichtung zum Vorhersagen von Verkehrsdaten, umfassend:

> ein Erhaltemodul (31), das konfiguriert ist, um Verkehrsdaten in einer Vielzahl von Zeiträumen zu erhalten, wobei die Vielzahl von Zeiträumen einen Zielzeitraum und mindestens einen historischen Zeitraum vor dem Zielzeitraum umfassen;

ein Screening-Modul (32), das konfiguriert ist, um einen Referenzzeitraum aus dem mindestens einen historischen Zeitraum auf Grundlage eines Zeitintervalls zwischen jedem des mindestens einen historischen Zeitraums und dem Zielzeitraum zu bestimmen;

ein Ausführungsmodul (33), das konfiguriert ist, um eine Datenähnlichkeit zwischen dem Zielzeitraum und dem Referenzzeitraum auf Grundlage von Verkehrsdaten zu einem ersten Zeitpunkt im Zielzeitraum und Verkehrsdaten zu einem Zeitpunkt, der dem ersten Zeitpunkt im Referenzzeitraum entspricht, zu bestimmen;

ein Abgleichsmodul (34), das konfiguriert ist, um Referenzverkehrsdaten zu einem Zeitpunkt im Referenzzeitraum zu erhalten, wobei der Zeitpunkt im Referenzzeitraum einem zweiten Zeitpunkt entspricht, der im Zielzeitraum vorherzusagen ist; und

ein Vorhersagemodul (35), das konfiguriert ist, um Verkehrsdaten zum zweiten Zeitpunkt im Zielzeitraum auf Grundlage der Datenähnlichkeit zwischen dem Zielzeitraum und dem Referenzzeitraum und den Referenzverkehrsdaten im Referenzzeitraum vorherzusagen,

wobei die Verkehrsdaten Fluss und Sättigung umfassen und das Ausführungsmodul (33) umfasst:

eine erste Konfigurationseinheit (331), die konfiguriert ist, um einen ersten Zustandsvektor des Zielzeitraums auf Grundlage der Verkehrsdaten zu einer Vielzahl von ersten Zeitpunkten im Zielzeitraum zu bestimmen;

eine zweite Konfigurationseinheit (332), die konfiguriert ist, um einen zweiten Zustandsvektor des Referenzzeitraums auf Grundlage von Verkehrsdaten zu Zeitpunkten, die der Vielzahl von ersten Zeitpunkten im Referenzzeitraum entsprechen, zu bestimmen; und

eine erste Ausführungseinheit (333), die konfiguriert ist, um:

einen ersten Korrelationskoeffizienten des Flusses zwischen historischen Zeiträumen auf Grundlage des Flusses jedes des mindestens einen historischen Zeitraums zu bestimmen;

einen zweiten Korrelationskoeffizienten der Sättigung zwischen historischen Zeiträumen auf Grundlage der Sättigung jedes des mindestens einen historischen Zeitraums zu bestimmen;

den Vektorabstand auf Grundlage einer Differenz, die dem Fluss zwischen dem ersten Zustandsvektor und dem zweiten Zustandsvektor entspricht, einer Differenz, die der Sättigung zwischen dem ersten Zustandsvektor und dem zweiten Zustandsvektor entspricht, des ersten Korrelationskoeffizienten und des zweiten Korrelationskoeffizienten zu bestimmen; und

die Datenähnlichkeit zwischen dem Zielzeitraum und dem Referenzzeitraum auf Grundlage eines Vektorabstands zwischen dem ersten Zustandsvektor und dem zweiten Zustandsvektor zu bestimmen.

6.  Einrichtung nach Anspruch 5, wobei das Screening-Modul (32) konfiguriert ist, um eine Zielanzahl historischer Zeiträume aus dem mindestens einen historischen Zeitraum, beginnend ab dem historischen Zeitraum, der dem Zielzeitraum am nächsten liegt, als Referenzzeiträume auszuwählen.

7.  Einrichtung nach Anspruch 6, wobei das Screening-Modul (32) weiter konfiguriert ist, um:

einen Datenvorhersagefehler jedes des mindestens einen historischen Zeitraums zu erhalten; und
die Zielanzahl auf Grundlage einer Anzahl historischer Zeiträume, die Datenvorhersagefehler innerhalb eines voreingestellten Fehlerbereichs aufweisen, in dem mindestens einen historischen Zeitraum zu bestimmen.

8.  Einrichtung nach einem der Ansprüche 5 bis 7, wobei das Vorhersagemodul (35) umfasst:

eine zweite Ausführungseinheit (351), die konfiguriert ist, um ein Gewicht des Referenzzeitraums auf Grundlage der Datenähnlichkeit zwischen dem Zielzeitraum und dem Referenzzeitraum zu bestimmen, wobei das Gewicht eine negative Korrelation mit der Datenähnlichkeit aufweist; und

eine Vorhersageeinheit (352), die konfiguriert ist, um die Verkehrsdaten zum zweiten Zeitpunkt im Zielzeitraum durch Gewichten der Referenzverkehrsdaten im Referenzzeitraum auf Grundlage des Gewichts des Referenzzeitraums vorherzusagen.

9.  Nichtflüchtiges computerlesbares Speichermedium, auf dem Computeranweisungen gespeichert sind, wobei die Computeranweisungen konfiguriert sind, um den Computer zu veranlassen, das Verfahren nach einem der Ansprüche 1-4 durchzuführen.

10. Computerprogrammprodukt, das ein Computerprogramm umfasst, wobei, wenn das Computerprogramm von einem Prozessor ausgeführt wird, das Verfahren nach einem der Ansprüche 1-4 implementiert wird.

**Revendications**

1. Procédé de prédiction de données de trafic, comprenant :

   l'obtention de données de trafic dans une pluralité de périodes, la pluralité de périodes comprenant une période cible et au moins une période historique antérieure à la période cible (101 ; 201) ;
   la détermination d'une période de référence à partir de la au moins une période historique sur la base d'un intervalle de temps entre chacune de la au moins une période historique et la période cible (102) ;
   la détermination d'une similarité de données entre la période cible et la période de référence sur la base de données de trafic à un premier instant dans la période cible et de données de trafic à un instant correspondant au premier instant dans la période de référence (103) ;
   l'obtention de données de trafic de référence à un instant dans la période de référence, l'instant dans la période de référence correspondant à un second instant à prédire dans la période cible (104 ; 206) ; et
   la prédiction de données de trafic au second instant dans la période cible sur la base de la similarité de données entre la période cible et la période de référence, et des données de trafic de référence dans la période de référence (105 ; 207),
   dans lequel les données de trafic comprennent le flux et la saturation, et la détermination de la similarité de données entre la période cible et la période de référence sur la base des données de trafic au premier instant de la période cible et des données de trafic à l'instant correspondant au premier instant dans la période de référence (103), comprend :

   la détermination d'un premier vecteur d'état de la période cible sur la base de données de trafic à une pluralité de premiers instants dans la période cible (203) ;
   la détermination d'un second vecteur d'état de la période de référence sur la base de données de trafic à des instants correspondant à la pluralité de premiers instants dans la période de référence (204) ;
   la détermination d'un premier coefficient de corrélation du flux entre des périodes historiques sur la base du flux de chacune de la au moins une période historique ;
   la détermination d'un second coefficient de corrélation de la saturation entre des périodes historiques sur la base de la saturation de chacune de la au moins une période historique ;
   la détermination de la distance vectorielle sur la base d'une différence correspondant au flux entre le premier vecteur d'état et le second vecteur d'état, d'une différence correspondant à la saturation entre le premier vecteur d'état et le second vecteur d'état, du premier coefficient de corrélation et du second coefficient de corrélation ; et
   la détermination de la similarité de données entre la période cible et la période de référence sur la base d'une distance vectorielle entre le premier vecteur d'état et le second vecteur d'état (205).

2. Procédé selon la revendication 1, dans lequel la détermination de la période de référence à partir de la au moins une période historique sur la base de l'intervalle de temps entre chacune de la au moins une période historique et la période cible (102) comprend :
   la sélection, à partir de la période historique la plus proche de la période cible, d'un nombre cible de périodes historiques parmi la au moins une période historique en tant que périodes de référence (202).

3. Procédé selon la revendication 2, avant de sélectionner le nombre cible de périodes historiques parmi la au moins une période historique commençant à partir de la période historique la plus proche de la période cible en tant que périodes de référence, comprenant en outre :

   l'obtention d'une erreur de prédiction de données de chacune de la au moins une période historique ; et
   la détermination du nombre cible sur la base d'un nombre de périodes historiques présentant une erreur de prédiction de données dans une plage d'erreur prédéfinie dans la au moins une période historique.

4. Procédé selon l'une quelconque des revendications 1 à 3, dans lequel la prédiction des données de trafic au second instant dans la période cible sur la base de la similarité de données entre la période cible et la période de référence, et des données de trafic de référence dans la période de référence (105 ; 207), comprend :

   la détermination d'un poids de la période de référence sur la base de la similarité de données entre la période cible et la période de référence, dans lequel le poids présente une corrélation négative avec la similarité de données ; et

la prédiction des données de trafic au second instant dans la période cible en pondérant les données de trafic de référence dans la période de référence sur la base du poids de la période de référence.

5. Appareil de prédiction de données de trafic, comprenant :

un module d'obtention (31), configuré pour obtenir des données de trafic dans une pluralité de périodes, la pluralité de périodes comprenant une période cible et au moins une période historique antérieure à la période cible ;

un module de filtrage (32), configuré pour déterminer une période de référence à partir de la au moins une période historique sur la base d'un intervalle de temps entre chacune de la au moins une période historique et la période cible ;

un module d'exécution (33), configuré pour déterminer une similarité de données entre la période cible et la période de référence sur la base de données de trafic à un premier instant dans la période cible et de données de trafic à un instant correspondant au premier instant dans la période de référence ;

un module d'adaptation (34), configuré pour obtenir des données de trafic de référence à un instant dans la période de référence, l'instant dans la période de référence correspondant à un second instant à prédire dans la période cible ; et

un module de prédiction (35), configuré pour prédire des données de trafic au second instant dans la période cible sur la base de la similarité de données entre la période cible et la période de référence, et des données de trafic de référence dans la période de référence,

dans lequel les données de trafic comprennent le flux et la saturation, et le module d'exécution (33) comprend :

une première unité de configuration (331), configurée pour déterminer un premier vecteur d'état de la période cible sur la base des données de trafic à une pluralité de premiers instants dans la période cible ;

une seconde unité de configuration (332), configurée pour déterminer un second vecteur d'état de la période de référence sur la base de données de trafic à des instants correspondant à la pluralité de premiers instants dans la période de référence ; et

une première unité d'exécution (333), configurée pour :

déterminer un premier coefficient de corrélation du flux entre des périodes historiques sur la base du flux de chacune de la au moins une période historique ;

déterminer un second coefficient de corrélation de la saturation entre des périodes historiques sur la base de la saturation de chacune de la au moins une période historique ;

déterminer la distance vectorielle sur la base d'une différence correspondant au flux entre le premier vecteur d'état et le second vecteur d'état, d'une différence correspondant à la saturation entre le premier vecteur d'état et le second vecteur d'état, du premier coefficient de corrélation et du second coefficient de corrélation ; et

déterminer la similarité de données entre la période cible et la période de référence sur la base d'une distance vectorielle entre le premier vecteur d'état et le second vecteur d'état.

6. Appareil selon la revendication 5, dans lequel le module de filtrage (32) est configuré pour sélectionner, à partir de la période historique la plus proche de la période cible, un nombre cible de périodes historiques parmi la au moins une période historique en tant que périodes de référence.

7. Appareil selon la revendication 6, dans lequel le premier module de filtrage (32) est en outre configuré pour :

obtenir une erreur de prédiction de données de chacune de la au moins une période historique ; et

déterminer le nombre cible sur la base d'un nombre de périodes historiques présentant une erreur de prédiction de données dans une plage d'erreur prédéfinie dans la au moins une période historique.

8. Appareil selon l'une quelconque des revendications 5 à 7, dans lequel le module de prédiction (35) comprend :

une seconde unité d'exécution (351), configurée pour déterminer un poids de la période de référence sur la base de la similarité de données entre la période cible et la période de référence, dans lequel le poids présente une corrélation négative avec la similarité de données ; et

une unité de prédiction (352), configurée pour prédire les données de trafic au second instant dans la période cible en pondérant les données de trafic de référence dans la période de référence sur la base du poids de la période de référence.

9. Support de stockage non transitoire lisible par ordinateur stockant des instructions informatiques, dans lequel les instructions informatiques sont configurées pour amener l'ordinateur à réaliser le procédé selon l'une quelconque des revendications 1-4.

10. Produit de programme informatique comprenant un programme informatique, dans lequel, lorsque le programme informatique est exécuté par un processeur, le procédé selon l'une quelconque des revendications 1-4 est mis en oeuvre.

obtain traffic data in a plurality of periods, the plurality of periods includes a target period and at least one historical period before the target period — 101

determine a reference period from the at least one historical period based on a time interval between each of the at least one historical period and the target period — 102

determine a data similarity between the target period and the reference period based on traffic data at a first time point in the target period and traffic data at a time point corresponding to the first time point in the reference period — 103

obtain reference traffic data at a time point in the reference period, the time point in the reference period corresponds to a second time point to be predicted in the target period — 104

predict traffic data at the second time point in the target period based on the data similarity between the target period and the reference period, and the reference traffic data in the reference period — 105

FIG. 1

obtain traffic data in a plurality of periods, the plurality of periods comprising a target period and at least one historical period before the target period — 201

select, starting from the historical period closest to the target period, a target number of historical periods from the at least one historical period as the reference periods — 202

determine a first state vector of the target period based on the traffic data at a plurality of first time points in the target period — 203

determine a second state vector of the reference period based on traffic data at time points corresponding to the plurality of first time points in the reference period — 204

determine the data similarity between the target period and the reference period based on a vector distance between the first state vector and the second state vector — 205

obtain reference traffic data at a time point in the reference period, the time point in the reference period corresponds to a second time point to be predicted in the target period — 206

predict traffic data at the second time point in the target period based on the data similarity between the target period and the reference period, and the reference traffic data in the reference period — 207

FIG. 2

obtaining module — 31

screening module — 32

executing module — 33

first configuring unit — 331

second configuring unit — 332

first executing unit — 333

matching module — 34

predicting module — 35

second executing unit — 351

predicting unit — 352

FIG. 3

400

computing unit — 401

ROM — 402

RAM — 403

404

I/O interface — 405

input unit — 406

output unit — 407

storage unit — 408

communication unit — 409

FIG. 4

**EP 4 040 421 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019139402 A1